# EUROPEAN PATENT APPLICATION

(11) **EP 2 109 286 A1**
(43) Date of publication of application: **14.10.2009**
(21) Application number: 09000945.7
(22) Date of filing: 23.01.2009
(51) Int. Cl.: H04L 29/06

(54) **Multimedia display device with dual wireless modules**

(30) Priority: 28.03.2008 TW 97205409 U
(71) Applicant: Huveur Technologies Ins., Taichung City 40360 (TW)
(72) Inventor: Ning, Tung, Taiping City Taichung County 411 (TW); Fothergill-Zittrer, Nicholas David, Toronto Ontario M4M-2Z4 (CA)
(74) Representative: Strehl Schübel-Hopf & Partner

(57) **Abstract**

This specification discloses a multimedia display device with dual wireless modules. It includes a body **1,** a first wireless module **2,** and a second wireless module **3.** The first wireless module **2** and the second wireless module **3** are built in the body **1** or connected to the body **1** via an input/output interface **12.** The body **1** is connected via the first wireless module **2** and the ISP service to the Internet **4.** The user is enabled to access multimedia data via network hot spots or remote devices. The data are processed by a data processing control unit **11** and presented on a display **14.** The second wireless module **3** is simulated by simulation software as an access point **31** for any device with a Wi-Fi module to connect to the Internet **4** through the first wireless module **2.**

## Description

### BACKGROUND OF THE INVENTION

### Field of Invention

The invention relates to a wireless multimedia display device and, in particular, to a multimedia display device with dual wireless modules.

### Related Art

The data in a conventional multimedia display device can only be updated via the memory card mode. However, such multimedia display devices often need to connect to an external device to update the multimedia data. Besides, there is no obvious progress in sharing data and data updating in real time. Therefore, some inventors add the wireless network function into the display device so that it can directly access remote multimedia data via the network.

The wireless network requires the setting of a service set identifier (SSID) and the verification of wired equivalent privacy (WEP) / Wi-Fi protected access (WPA). Moreover, one also needs to set the communication protocols such as the Internet protocol (IP) and the domain name system (DNS). All these make the network setting fairly complicated.

Therefore, it is imperative to solve the problems in the conventional multimedia display device by allowing its user to access multimedia data through network hot spots or remote devices.

### SUMMARY OF THE INVENTION

In view of the foregoing, an objective of the invention is to provide a multimedia display device with dual wireless modules. It includes: a body, a first wireless module, and a second wireless module. The first wireless module and the second wireless module are built in the body or outside the body via an input/output (I/O) interface. The body is connected via the first wireless module and the Internet service provider (ISP) service to the Internet, so that the user can rapidly access multimedia data through network hot spots or remote devices. The data are processed by a data processing control unit and shown on a display. The second wireless module is simulated by a set of simulation software as an access point (AP). It enables any wireless device with a Wi-Fi module to connect to the Internet via the first wireless module.

To achieve the above-mentioned objective, the invention includes:
a body, which has a display device for playing multimedia and a data processing control unit;
a first wireless module, which is electrically connected with the data processing control unit for the body to connect with a wide area network (WAN) server and thus with the Internet; and
a second wireless module, which is electrically connected with the data processing control unit for the body to be set as a wireless local area network (WLAN) router and to be connected with the Internet via the first wireless module.

### BRIEF DESCRIPTION OF THE DRAWINGS

The invention will become more fully understood from the detailed description given herein below illustration only, and thus is not limitative of the present invention, and wherein:
FIG. 1 is a schematic view showing the structure of the disclosed hardware; and
FIG. 2 is a schematic view showing the structure of the disclosed hardware according to a second embodiment.

### DETAILED DESCRIPTION OF THE INVENTION

The present invention will be apparent from the following detailed description, which proceeds with reference to the accompanying drawings, wherein the same references relate to the same elements.

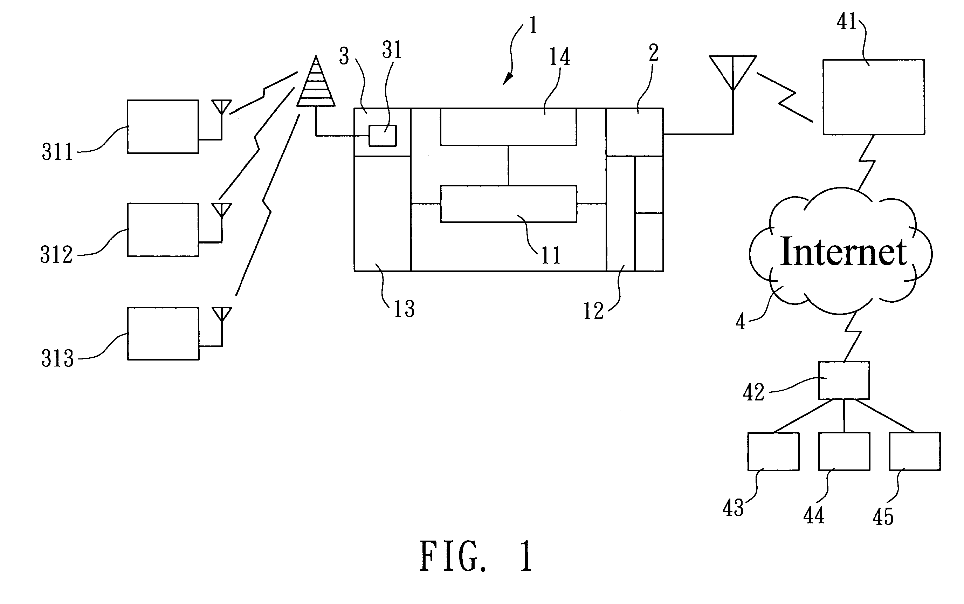

Please refer to FIG. 1 for an embodiment of the invention. It is used as one example to explain the invention. The spirit and scope of the invention are defined in the claims.

This embodiment provides a multimedia display device with dual wireless modules. It includes a body **1,** a first wireless module **2,** and a second wireless module **3.**

The body **1** includes a data processing control unit **11** for processing the signal data or multimedia data of at least one I/O interface **12** or at least one memory card slot **13** and displaying them on a display **14.**

The first wireless module **2** is a WiMAX compatible module and electrically connected with the data processing control unit **11** directly or via the I/O interface **12.** It enables the body **1** to connect to a wide area network (WAN) server **41** and thus to any server on the Internet **4.**

The second wireless module **3** is a Wi-Fi compatible module. Using a set of simulation software, it is simulated as an AP **31** that is electrically connected with the data processing control unit **11** directly or via the I/O interface **12.** The body **1** is thus set as a wireless local area network (WLAN) router. It is then connected via the first wireless module **2** to any server on the Internet **4.**

For the multimedia display device to display a set of multimedia data, it can be achieved by inserting a memory card to the memory card slot **13,** using the electrically connected data processing control unit **11** to process the data, and displaying the data on an electrically connected liquid crystal display (LCD) **11**. Alternatively, the WiMAX compatible module **2** connects to a wide area network (WAN) server **41** and to the Internet **4.** It further connects to an intermediate server **42** integrated with a photo server **43,** an audio/video (AV) server **44** or a blog server **45.** The data integrated by the intermediate server **42** are transmitted via the Internet **4** to the data processing control unit **11** of the body **1**. After being processed, the data are displayed on an LCD **14.**

Therefore, when the WiMAX compatible module **2** enables the user to connect to the Internet **4,** the Wi-Fi compatible module **3** is simulated by the simulation software into an AP **31** for personal computers (PC) **311,** laptop computers **312,** or multimedia display devices **313** with the Wi-Fi compatible module **3** to connect. Therefore, the invention is connected with the Internet **4** using the WiMAX compatible module **2.** The disclosed device and other Wi-Fi compatible modules **3** form a WLAN.

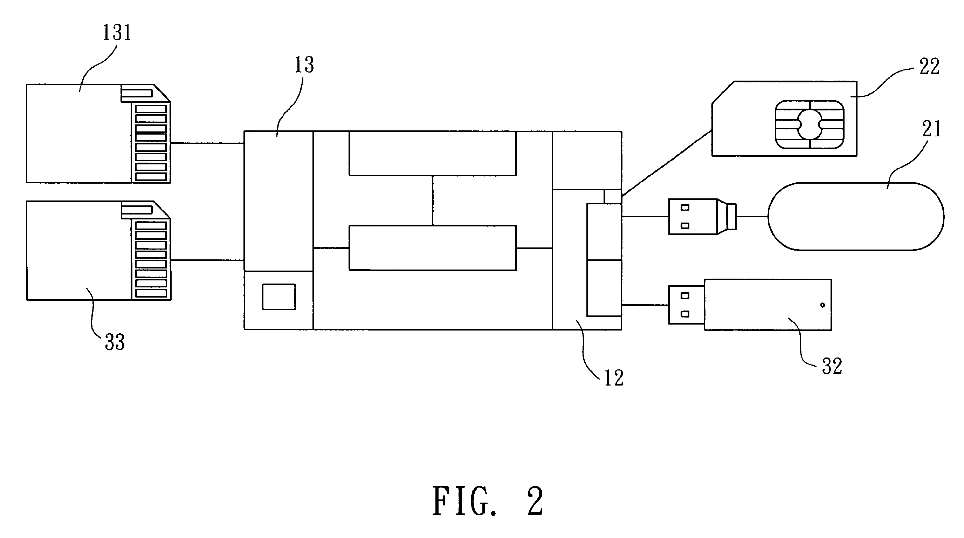

The invention of course has many other embodiments differing from each other in the detail. Please refer to FIG. **2** for a second embodiment of the invention. The first wireless module is an external 3.5G wireless network card device **21** electrically connected with the body 1 via the USB of the I/O interface **12.** Alternatively, the first wireless module can be a 3.5G USIM card **22** inserted in the SIM card compatible interface of the I/O interface **12.**

The second wireless module is an external Wi-Fi wireless network card **32** electrically connected with the body **1** via the USB of the I/O Interface **12.** Alternatively, the second wireless module is an SD Wi-Fi wireless network card **33** electrically connected with the body **1** via the memory card slot **13.** The memory card slot **13** can be inserted with an SD card **131.**

In summary, the disclosed multimedia display device with dual wireless modules enables its user to access multimedia data at intermediate servers or serves on the Internet in the indoor and outdoor environments. The multimedia data are displayed on a display device. It can further function as a medium for the connection with the Internet. It is a device with a Wi-Fi compatible module. This further enables the user to rapidly and conveniently access multimedia data over a network.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A multimedia display device with dual wireless modules,
**characterized in that** the device includes a body **(1),** a first wireless module **(2),** and a second wireless module **(3),**
wherein the body **(1)** has a display **(14)** for playing multimedia data and a data processing control unit **(11);** the first wireless module **(2)** is electrically connected with the data processing control unit **(11)** for the body **(1)** to connect to a wide area network (WAN) server **(41)** and thus to the Internet **(4);** and the second wireless module **(3)** is electrically connected with the data processing control unit **(11)** for the body **(1)** to be set as a wireless local area network (WLAN)

2. The device of claim 1, wherein the display **(14)** for playing multimedia data is a cathode ray tube (CRT) screen, a liquid crystal display (LCD), an organic light-emitting diode (OLED) display, or a plasma display panel (PDP).

3. The device of claim 1, wherein the first wireless module **(2)** and the second wireless module **(3)** are built in the body **(1).**

4. The device of claim 1, wherein the body **(1)** further has an input/output (I/O) interface **(12)** and the first wireless module **(2)** and the second wireless module **(3)** are connected to the I/O interface **(12).**

5. The device of claim 4, wherein the I/O interface **(12)** includes at least one recommended standard-232 (RS232) interface, a universal serial bus (USB) 1.1 interface, a USB 2.0 interface, a USB on-the-go (OTG) interface, an Institute of Electrical and Electronics Engineers (IEEE) 1394 interface, or a Personal Computer Memory Card International Association (PCMCIA) interface.

6. The device of claim 4, wherein the I/O interface further includes at least one memory card slot.

7. The device of claim 6, wherein the memory card slot is a secure digital (SD) I/O interface or a CompactFlash (CF) Card interface for the insertion of the wireless module of the corresponding interface.

8. The device of claim 6, wherein the memory card standards supported by the memory card slot include CF cards, memory sticks (MS) cards, SD cards, secure digital high capacity (SDHC) cards, miniSH cards, microSD cards, multimedia card (MMC), SmartMedia (SM) cards, or extreme digital (xD) picture cards.

9. The device of claim 1, wherein the first wireless module **(2)** is a worldwide interoperability for microwave access (WiMAX) compatible module.

10. The device of claim 4, wherein the I/O interface **(12)** further includes a module communication module port supporting at least the subscriber identity module (SIM) compatible interface, the universal subscriber identity module (USIM) compatible interface, the user identity model (UIM) compatible interface, or a removable user identity module (RUIM) compatible interface.

11. The device of claim 1, wherein the first wireless module **(2)** is a 3G (third-generation) compatible module, a 3.5G (High Speed Downlink Packet Access, HSDPA) compatible module, a 3.75G (High Speed Uplink Packet Access, HSUPA) compatible module, or a 4G (fourth-generation) compatible module.

12. The device of claim 1, wherein the second wireless module **(3)** is a Wi-Fi (wireless fidelity) compatible module.

13. The device of claim 12, wherein the Wi-Fi compatible module is further simulated by simulation software as an access point (AP).

14. The device of claim 13, wherein the access point **(31)** allows the wireless connection of a personal computer **(311),** a laptop computer **(312),** or a wireless device with the Wi-Fi compatible module.
